# EUROPÄISCHE PATENTSCHRIFT

(11) **EP 0 351 663 B1**
(45) Veröffentlichungstag und Bekanntmachung des Hinweises auf die Patenterteilung: **01.09.1993**
(21) Anmeldenummer: 89112406.7
(22) Anmeldetag: 07.07.1989
(51) Int. Cl.: C08F 220/42, C08F 220/12, C08F 212/04, C08F 218/04, C08F 2/26, D21H 17/34

(54) **Emulsionspolymerisate**
Emulsion polymers
Polymères en émulsion

(30) Priorität: 20.07.1988 DE 3824484
(43) Veröffentlichungstag der Anmeldung: 24.01.1990
(73) Patentinhaber: BAYER AG, 51368 Leverkusen (DE)
(72) Erfinder: Sackmann, Gunter, Dr., D-5090 Leverkusen 1 (DE); Henning, Wolfgang, Dr., D-5067 Kuerten (DE); Probst, Joachim, Dr., D-5090 Leverkusen 1 (DE); König, Joachim, Dr., D-5068 Odenthal (DE); Bäumgen, Heinz, D 5090 Leverkusen 1 (DE)

(56) Entgegenhaltungen:
- EP-A- 0 334 032
- DE-A- 1 953 349

## Beschreibung

Die Erfindung betrifft Emulsionspolymerisate, die dadurch erhältlich sind, daß man ein Gemisch aus
A) 5-95 Gew.-% mindestens eines Monomeren aus der Reihe Acrylnitril, Methacrylnitril, Carbonsäurevinylester und
B) 5-95 Gew.-% Acryl- und/oder Methacrylsäureester
wobei die Summe der Komponenten A) + B) 100 Gew.-% beträgt, in Gegenwart einer wäßrigen Lösung oder Dispersion eines anionisch modifizierten, vorzugsweise -SO₃⁻Me⁺ - und/oder -COO⁻Me⁺-Gruppen enthaltenden Polyurethans (Me⁺ = Kation, vorzugsweise H⁺, Na⁺, K⁺, Li⁺, NH₄⁺ oder ein substituiertes Ammoniumion) mit einem Gehalt an acylierten Harnstoffgruppen der Formel 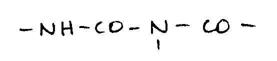
von 0,1 bis 20 Gew.-%, bezogen auf Feststoff, emulgiert, und man die erhaltene Emulsion einer radikalisch initiierten Polymerisation unterwirft.

Die hergestellten Emulsionspolymerisate finden vorzugsweise als Oberflächenleimungsmittel für Papier oder papierähnliche Materialien Verwendung.

Es ist bekannt (siehe z.B. DE-OS 34 38 563), anionische Papierleimungsmittel in Form von wäßrigen Polyurethanlösungen oder -dispersionen bzw. -teildispersionen herzustellen. Diese Leimungsmittel sind so aufgebaut, daß neben einem hydrophoben Bestandteil hydrophile Elemente in Form von Carboxylgruppen im Polyurethan enthalten sind. Diese Carboxylgruppen verleihen dem Polyurethan Wasserlöslichkeit bzw. -dispergierbarkeit.

Aus der DE-A-19 53 349 ist ein Verfahren zur Herstellung wäßriger Dispersionen von Polymerisaten olefinisch ungesättigter Monomere durch deren radikalische Polymerisation in Gegenwart bestimmter Urethangruppen enthaltender Emulgatoren bekannt.

Aus der älteren, nicht vorveröffentlichten EP-A-0 334 032 ist ein Verfahren zur Herstellung von wäßrigen Dispersionen von Polymerisaten durch Polymerisation von olefinisch ungesättigten Monomeren unter Verwendung bestimmter, Urethangruppen aufweisender Emulgatoren bekannt, die einen die Löslichkeit oder Dispergierbarkeit in Wasser gewährleistenden Gehalt an chemisch eingebauten hydrophilen Zentren aufweisen, die ausschließlich oder überwiegend endständig angeordnet sind.

Überraschenderweise wurde nun gefunden, daß man Polymeremulsionen herstellen kann, wenn man anionisch modifizierte Polyurethane, vorzugsweise solche die SO₃⁻Me⁺- und/oder COO⁻Me⁺-Gruppen enthalten, als polymere Emulgatoren einsetzt und in deren Gegenwart eine radikalisch initiierte Copolymerisation bestimmter Monomerengemische durchführt.

Die als Emulgator verwendete wäßrige Lösung oder Dispersion eines anionisch modifizierten Polyurethans ist durch Umsetzung von
a) organischen Polyisocyanaten, gegebenenfalls unter Mitverwendung organischer Monoisocyanate mit
b) gegenüber Isocyanatgruppen reaktionsfähige Gruppen aufweisenden Verbindungen, gegebenenfalls unter Mitverwendung von
c) Hilfs- und Zusatzstoffen
und Überführung des hergestellten Polyisocyanatadditionsprodukts in eine wäßrige Lösung oder Dispersion während oder im Anschluß an die Polyadditionsreaktion erhältlich, wobei als Aufbaukomponente b) anionische Gruppen, insbesondere Carboxylat- und/oder Sulfonatgruppen oder in derartige Gruppen überführbare Gruppen aufweisende Aufbaukomponenten (mit)verwendet werden, wobei die zumindest teilweise Überführung der in Salzgruppen der genannten Art überführbaren Gruppen während oder anschließend an die Polyaddition erfolgt, und gegebenenfalls unter Mitverwendung von Aufbaukomponenten a) und/oder b), welche innerhalb einer Polyetherkette vorliegende Ethylenoxyeinheiten aufweisen, wobei die Gesamtmenge derartiger hydrophiler Aufbaukomponenten so bemessen wird, daß in dem Polyisocyanat-Polyadditionsprodukt eine die Löslichkeit oder Dispergierbarkeit in Wasser gewährleistende Menge an anionischen Gruppen, insbesondere Carboxylat- und/oder Sulfonatgruppen, vorzugsweise von 2 bis 300 Milliäquivalenten pro 100 g Feststoff, und gegebenenfalls an Ethylenoxidgruppen der genannten Art, vorzugsweise von 0 bis 25 Gew.-%, vorliegen.

Bevorzugt werden als Aufbaukomponenten a) und/oder b) zumindest anteilig Acylharnstoffgruppen der Formel 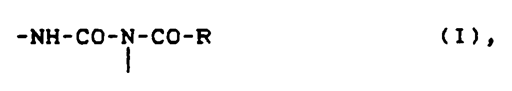
in der R einen organischen Rest, vorzugsweise einen gesättigten oder ungesättigten aliphatischen Kohlenwasserstoffrest mit 1 bis 35 C-Atomen, einen Arylrest mit 6 bis 10 C-Atomen oder einen araliphatischen Rest mit 7 bis 10 C-Atomen bedeutet, wobei bei Vorliegen von mehreren Resten R im gleichen Molekül nebeneinander unterschiedliche Reste R vorliegen können, aufweisende Aufbaukomponenten verwendet.

Die Gesamtmenge der eingebauten Struktureinheiten der Formel (I) entspricht einem Gehalt des Polyisocyanat-Additionsprodukts an acylierten Harnstoffgruppen der Formel 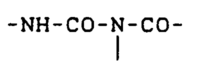
von 0,1 bis 20 Gew.-%, bezogen auf Feststoff.

Die als polymere Emulgatoren eingesetzten wasserlöslichen oder wasserdispergierbaren anionischen Polyurethanverbindungen werden nach bekannten Verfahren hergestellt, wie sie beispielsweise in der DE-OS 36 30 045 und den darin zitierten Literaturstellen beschrieben sind. Die besonders bevorzugten Acylharnstoffgruppen aufweisenden Polyisocyanat-Polyadditionsprodukte werden nach Verfahren hergestellt, wie sie z.B. in der DE-OS 34 38 563 beschrieben sind.

Bei der Herstellung der erfindungsgemäß eingesetzten Emulgatoren kommen a) organische Polyisocyanate, gegebenenfalls unter Mitverwendung von monofunktionellen Isocyanaten, b) Verbindungen mit mindestens zwei gegenüber Isocyanatgruppen reaktionsfähigen Gruppen, gegebenenfalls unter Mitverwendung von entsprechenden monofunktionellen Verbindungen und gegebenenfalls c) weitere Hilfs- und Zusatzmittel zum Einsatz.

Geeignete Aufbaukomponenten a) sind beispielsweise:
a1) Diisocyanate der Formel Q(NCO)₂, wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan, 4,4′-Diisocyanatodicyclohexylmethan, 4,4′-Diisocyanatodicyclohexylpropan-(2,2), 1,4-Diisocyanatobenzol, 2,4-Diisocyanatotoluol, 2,6-Diisocyanatotoluol, 4,4′-Diisocyanatodiphenylmethan, 4,4′-Diisocyanatodiphenylpropan-(2,2), p-Xylylendiisocyanat oder α,α,α′,α′-Tetramethyl-m- oder p-xylylendiisocyanat, sowie aus diesen Verbindungen bestehende Gemische.

Zu den Aufbaukomponenten a) gehören auch beispielsweise:
a2) die aus der Polyurethanchemie an sich bekannten, NCO-Gruppen aufweisenden Präpolymere, wie sie durch Umsetzung von einfachen Diisocyanaten der unter a1) beispielhaft genannten Art mit organischen Polyhydroxylverbindungen der nachstehend unter b1) beispielhaft genannten Art unter Einhaltung eines NCO/OH-Äquivalentverhältnisses von beispielsweise 1,2:1 bis 10:1, vorzugsweise 1,5:1 bis 2,5:1 erhalten werden können. Aus dem genannten Äquivalentverhältnis ist ersichtlich, daß unter "NCO-Präpolymeren" im Rahmen der Erfindung auch die sogenannten "Semipräpolymeren" zu verstehen sind, d. h. Gemische von überschüssigen, nicht umgesetzten Diisocyanaten mit echten NCO-Präpolymeren.

Zu den Aufbaukomponenten a) gehören außerdem beispielsweise
a3) Acylharnstoffgruppen der allgemeinen Formel 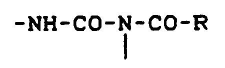 aufweisende Polyisocyanate. In dieser Formel hat R die bereits oben genannte Bedeutung.

Es ist grundsätzlich möglich, als Komponente a3) Polyisocyanate einzusetzen, die mehrere derartige Acylharnstoffgruppen aufweisen, wobei die einzelnen der Reste R der genannten Definition entsprechen, jedoch voneinander verschieden sein können.

Bei den Acylharnstoffgruppen aufweisenden Polyisocyanaten a3) kann es sich sowohl um vergleichsweise niedermolekulare als auch um höhermolekulare NCO-Präpolymere handeln. Die Herstellung der Aufbaukomponenten a3) erfolgt in Analogie zur Lehre der DE-OS 24 36 741 durch partielle Carbodiimidisierung der Isocyanatgruppen von organischen Polyisocyanaten der oben unter a1) und a2) beispielhaft genannten Art und Anlagerung von organischen Carbonsäuren R-COOH an die so hergestellten, Carbodiimid-modifizierten Polyisocyanate. Typische Beispiele geeigneter Aufbaukomponenten a3) sind beispielsweise Diisocyanate der allgemeinen Formel 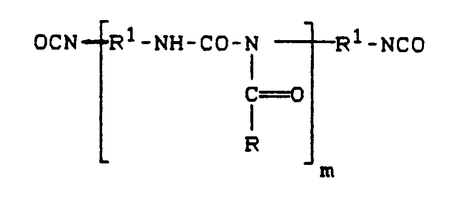
die in der Weise hergestellt werden, daß man in einer ersten Stufe Carbodiimidgruppen von Diisocyanatocarbodiimiden der allgemeinen Formel

OCN-(R¹-N=C=N)ₘ-R¹-NCO

vollständig oder teilweise mit Carbonsäuren der allgemeinen Formel

R-COOH

gegebenenfalls in Gegenwart eines geeigneten Lösungsmittels bei Temperaturen von 25 bis 100°C reagieren läßt.

In diesen Formeln stehen
- R: für einen Rest der bereits oben bei der Definition von R genannten Art,
- R¹: für einen zweiwertigen, gegebenenfalls Urethan-, Ester- und/oder Ethergruppen aufweisenden Kohlenwasserstoffrest, wie er durch Entfernung der endständigen Isocyanatgruppen aus einem einfachen organischen Diisocyanat oder einem Urethangruppen und gegebenenfalls Ether- oder Estergruppen aufweisenden NCO-Präpolymer erhalten wird, wobei bei Vorliegen von mehreren Resten R¹ im gleichen Molekül gleichzeitig auch unterschiedliche, der genannten Definition entsprechende Reste R¹ vorliegen können, und
- m: für eine ganze oder (im statistischen Mittel) gebrochene Zahl von 1 bis 10, vorzugsweise von 1 bis 4.

Die Herstellung der Diisocyanatocarbodiimide ist an sich bekannt und wird z. B. in den US-Patentschriften 28 40 589 und 29 41 966 sowie von P. W. Campbell und K. C. Smeltz in Journal of Organic Chemistry, 28, 2069 (1963) beschrieben. Besonders schonend und frei von Nebenprodukten lassen sich Diisocyanatocarbodiimide auch durch eine Heterogenkatalyse gemäß den deutschen Offenlegungsschriften 25 04 400 und 25 52 350 herstellen. Die Carbodiimidisierung von Diisocyanaten in Gegenwart sehr geringer Mengen an Phospholinoxid unter anschließender Blockierung des Katalysators mit Säurechloriden wird in der DE-OS 26 53 120 beschrieben.

Als Aufbaukomponente für die Carbodiimidgruppen aufweisenden Diisocyanate werden bevorzugt aromatische Diisocyanate der oben unter a1) beispielhaft genannten Art eingesetzt.

Geeignete Carbonsäuren der Formel R-COOH sind beispielsweise Essigsäure, Propionsäure, Hexancarbonsäure, Laurinsäure, Palmitinsäure, Stearinsäure, Benzoesäure, Phenylessigsäure, Acrylsäure, Methacrylsäure, Crotonsäure, 10-Undecensäure, Ölsäure oder Linolsäure. Grundsätzlich ist es auch möglich, andere Monocarbonsäuren einzusetzen, die nicht der oben gemachten Definition von R entsprechen, wie z. B. Chloressigsäure, Cyclohexancarbonsäure, Abietinsäure, 4-Dimethylaminobenzoesäure oder auch Monoester oder Monoamide von Dicarbonsäuren wie Oxalsäure, Malonsäure, Bernsteinsäure, Maleinsäure, Fumarsäure oder Phthalsäure mit einwertigen Alkoholen oder Aminen. Grundsätzlich können auch beliebige Gemische der beispielhaft genannten Säuren der allgemeinen Formel R-COOH eingesetzt werden. Die Menge der eingesetzten Säuren wird so bemessen, daß pro Mol Carbodiimidgruppen 0,2 bis 1,2, vorzugsweise 0,5 bis 1,2 Mol an Carboxylgruppen im Reaktionsgemisch vorliegen.

Die Herstellung der ebenfalls als Aufbaukomponente a3) geeigneten, Acylharnstoffgruppen aufweisenden NCO-Prepolymeren kann beispielsweise entweder durch Umsetzung der bereits genannten, Acylharnstoffgruppen aufweisenden Polyisocyanate auf Basis niedermolekularer Diisocyanate mit unterschüssigen Mengen an Polyhydroxylverbindungen der nachstehend unter b1) und/oder b2) beispielhaft genannten Art oder durch partielle Carbodiimidisierung von NCO-Präpolymeren der oben unter a2) beispielhaft genannten Art und anschließender Umsetzung der Carbodiimidisierungsprodukte mit Carbonsäuren R-COOH in Analogie zu den oben gemachten Ausführungen erfolgen.

Weitere mögliche Aufbaukomponenten a) sind auch beispielsweise a4) hydrophil modifizierte Polyisocyanate, beispielsweise seitenständige Polyetherketten mit eingebauten Ethylenoxideinheiten aufweisende Diisocyanate gemäß US-PS 39 20 598 oder sulfonierte Diisocyanate der beispielsweise in DE-OS 22 27 111 bzw. DE-OS 23 59 615 genannten Art. Die Mitverwendung derartiger, hydrophil modifizierter Polyisocyanate ist jedoch weniger bevorzugt, da die hydrophilen Gruppen vorzugsweise über die nachstehend näher beschriebene Aufbaukomponente b) eingebaut werden.

Grundsätzlich ist es auch möglich, die beispielhaft genannten Aufbaukomponenten a1) bis a4) in Kombination mit höherfunktionellen niedermolekularen Polyisocyanaten wie beispielsweise dem Umsetzungsprodukt von 3 Mol 2,4-Diisocyanatotoluol mit einem Mol Trimethylolpropan und/oder in Kombination mit monofunktionellen Isocyanaten wie Phenylisocyanat, Hexylisocyanat oder n-Dodecylisocyanat einzusetzen. Auch der Einsatz von monofunktionellen, Polyetherketten mit eingebauten Ethylenoxideinheiten aufweisenden Isocyanaten der beispielsweise in den US-Patentschriften 39 20 598 bzw. 42 37 267 genannten Art ist prinzipiell möglich. Bei Verwendung derartiger monofunktioneller Isocyanate ist jedoch im allgemeinen, insbesondere bei der Herstellung von hochmolekularen Polyurethanen, durch gleichzeitige Mitverwendung von höher als difunktionellen Aufbaukomponenten ein vorzeitiger Kettenabbruch zu verhindern. Vorzugsweise werden difunktionelle Isocyanate der oben beispielhaft genannten Art als Aufbaukomponente a) verwendet.

Geeignete Aufbaukomponenten b) sind beispielsweise
b1) die aus der Polyurethanchemie bekannten Polyhydroxypolyester oder -polyether des Molekulargewichtsbereichs 400 bis 4.000, vorzugsweise die entsprechenden difunktionellen Verbindungen, wie sie in an sich bekannter Weise durch Umsetzung von mehrbasischen Säuren, insbesondere difunktionellen Säuren wie z. B. Adipinsäure, Phthalsäure, Tetrahydropthalsäure und/oder Hexahydrophthalsäure mit überschüssigen Mengen an mehrwertigen Alkoholen, vorzugsweise zweiwertigen Alkoholen der nachstehend unter b2) beispielhaft genannten Art bzw. durch Alkoxylierung geeigneter Startermoleküle wie z. B. Wasser, Ammoniak, Anilin oder den nachstehend unter b2) beispielhaft genannten mehrwertigen Alkoholen mit Alkylenoxiden wie z. B. Ethylenoxid und/oder Propylenoxid zugänglich sind.

Geeignete Aufbaukomponenten b) sind weiterhin beispielsweise
b2) mehrwertige Alkohole, insbesondere zweiwertige Alkohole des Molekulargewichtsbereichs 62 bis 399, insbesondere die entsprechenden Alkanpolyole wie z. B. Ethylenglykol, Propylenglykol, Tetramethylendiol, Hexamethylendiol, Glycerin, Trimethylolpropan oder Trimethylolethan oder auch niedermolekulare, Ethergruppen aufweisende Alkohole wie z. B. Diethylenglykol, Triethylenglykol, Dipropylenglykol oder Tripropylenglykol. Beliebige Gemische derartiger Alkohole können ebenfalls eingesetzt werden.

Geeignete Aufbaukomponenten b) sind weiterhin beispielsweise
b3) mindestens zwei aminische oder hydrazinische Aminogruppen aufweisende Verbindungen des Molekulargewichtsbereichs 32 bis 400, wie z. B. Ethylendiamin, Hexamethylendiamin, Isophorondiamin, 2,4-Diaminotoluol, 4,4′-Diaminodiphenylmethan, 4,4′-Diaminodicyclohexylmethan, Diethylentriamin, Triethylentetramin, Hydrazin bzw. Hydrazinhydrat. Derartige Aufbaukomponenten können auch in blockierter Form, d. h. insbesondere in Form der entsprechenden Ketimine bzw. Ketazine (Umsetzungsprodukte mit einfachen Ketonen wie Aceton, Methylethylketon oder Methylisobutylketon) eingesetzt werden. Bei Verwendung derartiger blockierter Kettenverlängerungsmittel erfolgt erst unter dem hydrolytischen Einfluß des Dispergierwassers eine Freisetzung der mit Isocyanatgruppen reaktionsfähigen Gruppen.

Weitere als Aufbaukomponente b) geeignete Verbindungen sind beispielsweise
b4) ionische Aufbaukomponenten oder potentielle ionische Aufbaukomponenten, die im allgemeinen ein Molekulargewicht von 60 bis 400, vorzugsweise 89 bis 400 aufweisen, und die neben mindestens einer gegenüber Isocyanatgruppen reaktionsfähigen Gruppe mindestens eine Carboxylat- und/oder Sulfonatgruppe oder in eine derartige Gruppe überführbare Gruppe aufweisen. Hierzu gehören beispielsweise die Sulfonatgruppen aufweisenden aliphatischen Diole gemäß DE-OS 2 446 440 oder DE-OS 2 437 218, Carboxylatgruppen oder in Carboxylatgruppen überführbare Carboxylgruppen aufweisenden Diole und/oder Diaminosulfonate der in CA-PS 928 323 beschriebenen Art, wie z.B. das Natriumsalz der N-(2-Aminoethyl)-2-aminoethansulfonsäure.

Zu den besonders bevorzugten ionischen Aufbaukomponenten b4) gehören Sulfonatdiole der allgemeinen Formel 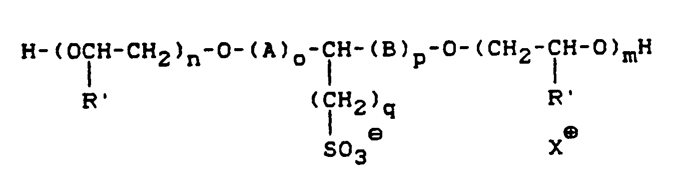
wobei
- A und B: für gleiche oder verschiedene zweiwertige aliphatische Kohlenwasserstoffreste mit 1 bis 6 Kohlenstoffatomen stehen,
- R': für Wasserstoff, einen aliphatischen Kohlenwasserstoffrest mit 1 bis 4 Kohlenstoffatomen oder einen Phenylrest steht,
- X^{⊕}: für ein Alkalimetallkation oder eine gegebenenfalls substituierte Ammoniumgruppe steht,
- n und m: für gleiche oder verschiedene Zahlen von 0 bis 30 stehen,
- o und p: für jeweils 0 oder 1 stehen und
- q: für eine ganze Zahl von 0 bis 2 steht.

Zu den bevorzugten Aufbaukomponenten b4) mit Carboxylatgruppen oder in Carboxylatgruppen überführbare Gruppen gehören Hydroxycarbonsäure der allgemeinen Formel

(HO)ₓ-Q(COOH)_{q}

worin
- Q: für einen linearen oder verzweigten Kohlenwasserstoffrest mit 1 bis 12 Kohlenstoffatomen steht und
- x und y: jeweils für ganze Zahlen von 1 bis 3 stehen, wobei die Summe x + y den Wert von 2 bis 4 ergibt.

Zu den besonders bevorzugten Aufbaukomponenten b4) der zuletzt genannten Formel gehören solche Säuren, für welche x für 2 und y für 1 steht, wie sie beispielhaft in US-PS 3 412 054 beschrieben sind. Die α,α-Dimethylolpropionsäure bzw. deren Salze mit tertiären Aminen wie z.B. Trimethylamin, Triethylamin, N-Methylmorpholin, N-Ethylmorpholin, N-Methylpiperazin, N,N-Dimethylethanolamin oder N-Methyldiethanolamin stellen die ganz besonders bevorzugten Aufbaukomponenten b4) der zuletzt genannten allgemeinen Formel dar.

Bei allen Varianten des Verfahrens wird die Menge der Sulfonat- und/oder Carboxylatgruppen, oder in der derartige Gruppen überführbare Gruppen aufweisenden Aufbaukomponente so gewählt, daß in den erfindungsgemäßen Verfahrensprodukten 2 bis 300, bevorzugt 10 bis 300, Milliäquivalente pro 100 g Feststoff vorliegen.

Erfindungsgemäß als Aufbaukomponente b) geeignet sind weiterhin beispielsweise
b5) innerhalb von Polyetherketten eingebaute Ethylenoxideinheiten aufweisende ein- oder zweiwertige Alkohole. Hierzu gehören beispielsweise Verbindungen der allgemeinen Formel 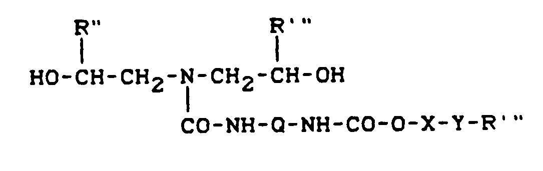 in welcher
   - Q: für einen zweiwertigen Rest steht, wie er durch Entfernung der Isocyanatgruppen aus einem Diisocyanat der Formel Q(NCO)₂ der vorstehend unter a1) genannten Art erhalten wird,
   - R'': für Wasserstoff oder einen einwertigen Kohlenwasserstoffrest mit 1 bis 8 Kohlenstoffatomen, vorzugsweise für Wasserstoff oder eine Methylgruppe, steht,
   - R''': für einen einwertigen Kohlenwasserstoffrest mit 1 bis 12 Kohlenstoffatomen, vorzugsweise einen unsubstituierten Alkylrest mit 1 bis 4 Kohlenstoffatomen steht,
   - X: für einen Rest steht, wie er durch Entfernung des endständigen Sauerstoffatoms von einer Polyalkylenoxidkette mit 5 bis 90, vorzugsweise 20 bis 70 Kettengliedern erhalten wird, welche zumindest zu 40 %, vorzugsweise zumindest zu 65 % aus Ethylenoxideinheiten bestehen und die neben Ethylenoxideinheiten auch Propylenoxid-, Butylenoxid- oder Styroloxid-Einheiten darstellen können, wobei unter den letztgenannten Einheiten Propylenoxideinheiten bevorzugt sind, und
   - Y: für Sauerstoff oder -NR^{iv}- steht, wobei R^{iv} bezüglich seiner Definition R''' entspricht.

Die Herstellung der Verbindungen der letztgenannten Formeln kann gemäß den Verfahrensweisen der US-PS 39 05 929 oder der US-PS 41 90 566 erfolgen.

Weitere bevorzugte hydrophile Einbaukomponenten b5) sind Verbindungen der allgemeinen Formel

HO-X-Y-R'''

wobei
- X, Y und R''': die bereits genannte Bedeutung haben.

Bei Mitverwendung derartiger, monofunktioneller, nichtionisch hydrophiler Polyether kann es oftmals von Vorteil sein, durch Mitverwendung von mehr als difunktionellen Aufbaukomponenten einen vorzeitigen Kettenabbruch zu verhindern. Die monofunktionellen Polyether der zuletzt genannten allgemeinen Formel werden nach an sich bekannten Verfahren, wie sie beispielsweise in den US-Patentschriften 39 05 929, 41 90 566 oder 42 37 264 beschrieben sind, hergestellt.

Weitere geeignete Aufbaukomponenten b) sind
b6) Aminoalkohole des Molekulargewichtsbereichs 61 bis 300, die keinen tert. Stickstoff aufweisen, wie z. B. Ethanolamin, Propanolamin, Diethanolamin oder Dipropanolamin.

Weitere geeignete Aufbaukomponenten b) sind
b7) Acylharnstoffgruppen aufweisende, mehrwertige, vorzugsweise zweiwertige Alkohole, wie sie beispielsweise durch Umsetzung der unter a3) beispielhaft genannten Acylharnstoffgruppen aufweisenden Diisocyanate, insbesondere jenen auf Basis niedermolekularer Ausgangsdiisocyanate mit den unter b1), b2) und/oder b6) beispielhaft genannten Verbindungen unter Einhaltung eines OH/NCO-Verhältnisses von 1,2:1 bis 30:1, beziehungsweise bei Verwendung der Aminoalkohole b6) eines NH₂/NCO-Verhältnisses von 0,6:1 bis 1,2:1 oder, bevorzugt, durch Umsetzung der bei der Erläuterung der Komponente a3) genannten Carbodiimidgruppen aufweisenden Polyisocyanate, vorzugsweise Diisocyanate auf Basis niedermolekularer Ausgangsisocyanate mit den genannten Polyhydroxylverbindungen unter Einhaltung eines OH/NCO-Äquivalentverhältnisses von 1,2:1 bis 30:1, beziehungsweise bei Verwendung der Aminoalkohole b6) eines NH₂/NCO-Verhältnisses von 0,6:1 bis 1,2:1 und anschließende Umsetzung der Umsetzungsprodukte mit Carbonsäuren R-COOH im Sinne der oben gemachten Ausführungen erhalten werden können. Im Falle der Verwendung von Hydroxylgruppen aufweisenden Ausgangsmaterialien b1 und/oder b2 erfolgt die Umsetzung der Polyhydroxylkomponente mit der Isocyanatkomponente jeweils vorzugsweise unter Einhaltung eines OH/NCO-Äquivalentverhältnisses von 1,5:1 bis 15:1 und insbesondere von 1,5:1 bis 3:1. Die Herstellung der Hydroxylgruppen aufweisenden Aufbaukomponenten b7) bzw. der zu ihrer Herstellung verwendeten Zwischenprodukte mit Carbodiimidgruppen erfolgt im allgemeinen im Temperaturbereich von 25 bis 130°C, vorzugsweise von 50 bis 120°C, gegebenenfalls in Anwesenheit eines inerten Lösungsmittels der in DE-OS 27 14 293 beispielhaft genannten Art. Bezüglich der Einzelheiten der Herstellung derartiger, Acylharnstoffgruppen aufweisender Polyhydroxylverbindungen sei im übrigen auf diese Vorveröffentlichung verwiesen.

Schließlich ist als weitere geeignete Aufbaukomponente b)
b8) Wasser zu nennen, welches die Doppelfunktion der kontinuierlichen Phase der erfindungsgemäßen Dispersion einerseits und die eines Kettenverlängerungsmittels andererseits übernehmen kann. Vorzugsweise werden im Sinne der Isocyanat-Additionsreaktion difunktionelle Aufbaukomponenten b) eingesetzt. Es ist jedoch, wie bereits ausgeführt, auch möglich, monofunktionelle Aufbaukomponenten b), insbesondere der unter b4) oder b5) genannten Art oder, zwecks Erreichens einer gegebenenfalls erwünschten Molekülverzweigung, höher als difunktionelle Aufbaukomponenten b) einzusetzen.

Zu den gegebenenfalls mit einzusetzenden Hilfs- und Zusatzmitteln c) gehören beispielsweise
c1) Lösungsmittel, die gegebenenfalls beim Aufbau der Polyurethane mitverwendet werden. Geeignete Lösungsmittel sind beispielsweise Toluol, Xylol, Aceton, Methylglykolacetat, Ethylglycolacetat. Propylenglykolmonomethyletheracetat, Butylacetat, N-Methylpyrrolidon, Essigsäureethylester oder Methylethylketon. Vorzugsweise werden mit Wasser mischbare Lösungsmittel wie Aceton oder N-Methylpyrrolidon verwendet.

Weitere, gegebenenfalls mitzuverwendende Hilfs- und Zusatzmittel c) sind beispielsweise
c2) einerseits Verbindungen, die mit Isocyanatgruppen unter Bildung von acylierten Aminogruppen reagieren und andererseits Verbindungen, die mit derartigen acylierten Aminogruppen im Sinne einer Kondensationsreaktion zur Umsetzung befähigt sind. Zu den erstgenannten Verbindungen gehören beispielsweise Ammoniak oder Harnstoff, zu den letztgenannten Verbindungen gehören beispielsweise beliebige Aldehyde, insbesondere Formaldehyd.

Weitere, gegebenenfalls mitzuverwendende Hilfs- und Zusatzmittel c) sind beispielsweise
c3) beliebige, aus der Polyurethanchemie an sich bekannte Beschleuniger für die Isocyanat-Polyadditionsreaktion. Im allgemeinen ist die Mitverwendung dieser Katalysatoren jedoch nicht erforderlich.

Die Herstellung der erfindungsgemäß eingesetzten Emulgatoren kann nach beliebigen Methoden des Standes der Technik erfolgen, wie sie z. B. in der DE-OS 35 23 856 angegeben sind.

Vorzugsweise führt man die Polymerisation des Monomerengemisches aus A) und B) in Gegenwart von 10-70 Gew.-%, bezogen auf das Monomerengemisch des anionisch modifizierten Polyurethans durch.

Besonders bevorzugt beträgt das Gewichtsverhältnis zwischen dem anionisch modifizierten Polyurethan und dem Monomergemisch aus A) und B) 1:4 bis 1:1.

Vorzugsweise wird das erfindungsgemäße Emulsionspolymerisat als kolloiddisperse Lösung mit mittlerem Teilchendurchmesser von vorzugsweise etwa 15 bis etwa 200 nm, besonders bevorzugt 20-150 nm, erhalten.

Für die Emulgierung reicht es im allgemeinen aus, wenn man die anionische Polyurethanverbindung ohne weitere Zusätze für die Emulsionspolymerisation einsetzt. In manchen Fällen erweist es sich jedoch als recht günstig, wenn man zusammen mit dem polymeren anionischen Emulgator oligomere nichtionogene und/oder niedermolekulare anionische Hilfsemulgatoren, vorzugsweise in Mengenverhältnissen von 1 bis 40 Gew.-%, besonders bevorzugt 3 bis 20 Gew.-%, bezogen auf den anionischen Polyurethan-Emulgator, einsetzt.

Als nichtionogene Hilfsemulgatoren eignen sich Umsetzungsprodukte von aliphatischen, araliphatischen, cycloaliphatischen oder aromatischen Carbonsäuren, Alkoholen, Phenolderivaten bzw. Aminen mit Epoxiden wie z. B. Ethylenoxid.

Beispiele dafür sind Umsetzungsprodukte von Ethylenoxid mit Carbonsäuren wie z. B. Laurinsäure, Stearinsäure, Ölsäure, den Carbonsäuren des Ricinusöls, Abietinsäure, mit längerkettigen Alkoholen wie Oleylalkohol, Laurylalkohol, Stearyalkohol, mit Phenolderivaten wie z.B. substituierten Benzyl-, Phenylphenolen, Nonylphenol und mit längerkettigen Aminen wie z. B. Dodecylamin und Stearylamin. Bei den Umsetzungsprodukten mit Ethylenoxid handelt es sich um Oligo- bzw. Polyether mit Polymerisationsgraden zwischen 2 und 100, vorzugsweise von 5 bis 50.

Bevorzugte nichtionogene Emulgatoren entsprechen der Formel

R₁-X-(CH₂-CH₂-O)ₙ-H

worin
- X: O, NH oder COO bedeutet,
- R₁: ein aliphatischer, cycloaliphatischer, araliphatischer oder aromatischer Kohlenwasserstoffrest mit 6-30 C-Atomen ist, und
- n: eine ganze Zahl ≧ 2 ist.

Bevorzugte erfindungsgemäße Emulsionspolymerisate sind dadurch erhältlich, daß man ein Gemisch aus 20 bis 80 Gew.-% A) und 80 bis 20 Gew.-% B), besonders bevorzugt 30 bis 70 Gew.-% A) und 70 bis 30 Gew.-% B) und ganz besonders bevorzugt etwa 50 Gew.-% A) und etwa 50 Gew.-% B) einsetzt.

Als Monomere A) seien beispielhaft genannt: Acrylnitril, Methacrylnitril, Vinylester von aliphatischen C₂-C₆-Carbonsäuren, z.B. Vinylacetat, Vinylpropionat.

Als Monomere B) seien beispielhaft genannt: (Meth)Acrylsäureester mit 1 bis 12 C-Atomen im Alkoholrest wie Ethylacrylat, Methylmethacrylat, n-Butylacrylat, i-Butylacrylat, 2-Ethylhexylacrylat, 2-Hydroxyethylacrylat, 3-Hydroxypropylmethacrylat. n-Butylacrylat.

Acrylnitril wird bevorzugt eingesetzt, so daß z.B. ein Copolymerisat aus 20 bis 80, insbesondere 30 bis 70, Gew.-% n-Butylacrylat und 80 bis 20, insbesondere 70 bis 30 Gew.-% Acrylnitril besonders wichtig ist.

Me⁺ in der Bedeutung substituiertes Ammoniumion steht vorzugsweise für 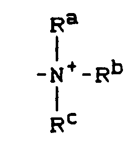
wobei R^{a}, R^{b}, R^{c} Wasserstoff, C₁-C₆-Alkyl, Phenyl, Benzyl, bezeichnen und mindestens einer dieser Substituenten H ist.

Die radikalisch initiierte Emulsionspolymerisation der obengenannten Monomeren in Gegenwart der anionisch modifizierten Polyurethanlösungen, die als polymere Emulgatoren oder Pfropfsubstrate wirken können, erfolgt in üblicher Weise. Beispielsweise kann man dabei wie im folgenden beschrieben vorgehen:

Es wird eine durch Radikalstarter initiierte Copolymerisation der Monomerengemische in Gegenwart wäßriger Lösungen der obengenannten polymeren Emulgatoren durchgeführt. Als Initiatoren eignen sich z.B. Kaliumpersulfat, Ammoniumpersulfat, organische Peroxide, organische Hydroperoxide, Wasserstoffperoxid sowie Redoxsysteme. Die Emulsionspolymerisationen erfolgen im allgemeinen bei Temperaturen zwischen 20 und 100°C, bevorzugt zwischen 40 und 80°C. Die Menge der polymeren Emulgatoren beträgt, bezogen auf die zu polymerisierenden Monomeren, bevorzugt 5 bis 50 Gew.-%, besonders bevorzugt zwischen 7,5 und 30 Gew.-%.

Die Durchführung der Emulsionspolymerisationen kann entweder auf die Weise erfolgen, daß man eine wäßrige Lösung des polymeren Emulgators vorlegt und dann die Monomeren und den Initiator über einen bestimmten Zeitraum, z.B. zwischen 2 und 6 Stunden, getrennt zudosiert, oder aber, daß man einen Teil des polymeren Emulgators in Wasser vorlegt und den Rest zusammen mit den Monomeren und den Initiator in getrennten Mengenströmen ebenfalls über einen Zeitraum von 2 bis 6 Stunden zudosiert. Es kann aber auch so gearbeitet werden, daß über den gesamten Zeitraum der Polymerisation polymerer Emulgator, Initiator und Monomere getrennt und kontinuierlich zudosiert werden und nur eine bestimmte Menge an Wasser vorgelegt wird. Diese Art der Polymerisation eignet sich aber auch zur Durchführung nach einer batch-Fahrweise, d.h. polymerer Emulgator, Monomerengemisch und Initiator, werden zusammen vorgelegt, auf die gewünschte Polymerisationstemperatur erhitzt und zwischen 2 und 10 Stunden bei dieser Temperatur gehalten.

Nach Beendigung der Polymerisationsreaktion auf die beispielhaft beschriebene Art ist eine feinteilige wäßrige Polymeremulsion mit einem durch Laser-Streulicht-Spektroskopie gemessenen mittleren Teilchendurchmesser zwischen 15 und 200 nm, vorzugsweise zwischen 20 und 150 nm entstanden. Dispersionen mit Teilchengrößen unter 50 nm erscheinen transparent, während solche mit größeren Teilchen trüber erscheinen. Die Emulsion enthält neben Homo- und/oder Copolymeren der zur Polymerisation eingesetzten Monomeren oder Monomergemische auch Anteile von Pfropfprodukten der Monomeren, die auf die polymeren Emulgatoren als Pfropfsubstrate aufgepfropft sind. Solche Pfropfreaktionen, die durch Übertragungsreaktionen durch den Emulgator ausgelöst werden, sind in der Literatur bekannt (vgl. H. Gerrens, Fortschritte der Hochpolymer-Forschung, Bd. I, (1959) S. 300).

Gewünschtenfalls kann man die wäßrigen Polymeremulsionen in üblicher Weise zur Gewinnung der festen Polymerisate aufarbeiten.

Als Initiatoren für die Emulsionspolymerisation kommen bevorzugt wasserlösliche, Radikale liefernde, nichtionogene Peroxide wie Wasserstoffperoxid und t-Butylhydroperoxid sowie wasserlösliche Azoverbindungen, wie sie z.B. in der DE-OS 2 841 045 beschrieben sind, in Betracht. Weiterhin sind Redoxsysteme geeignet, die aus peroxidischen Initiatoren und Reduktionsmitteln wie Aminen, Polyaminen, Thioharnstoff, Eisen-II-salzen usw. bestehen. Als Initiatoren kommen auch wasserunlösliche Initiatoren, wie Azoisobutyronitril und Benzoylperoxid in Betracht. Letztere sind dann praktisch nur in der organischen Phase gelöst. Die genannten Initiatoren werden in Mengen von 0,1 bis 5 Gew.-%, bevorzugt 0,3 bis 3,0 Gew.-%, bezogen auf das Monomergemisch, hinzugegeben.

Zur Regulierung der Molekulargewichte der Polymeren können noch übliche Regler eingesetzt werden, z.B. n-Dodecylmercaptan, t-Dodecylmercaptan, Diisopropylxanthogendisulfid, Thioglykol und Thioglycerin. Sie werden in Mengen von 0,1 bis 2 Gew.-%, bezogen auf die Monomermischung, zugegeben.

Die erfindungsgemäßen Emulsionspolymerisate können z.B. als filmbildende Materialien oder als Schlichtemittel für Fasern, insbesondere Glasfasern, verwendet werden. Vorzugsweise werden sie jedoch in Form (von bei ihrer Herstellung anfallenden) wäßrigen Emulsionen zur Oberflächenleimung von Papier oder papierähnlichen Materialien, wie Karton oder Pappe, eingesetzt. Es handelt sich dabei um Oberflächenleimungsmittel mit schwach anionischem Charakter, die ein breites Anwendungsspektrum besitzen. So können sie bei der Papierherstellung sowohl im sauren als auch im neutralen pH-Bereich verwendet werden.

Sie führen bei alaunhaltigen, alaunfreien, vorgeleimten und holzhaltigen Papieren, die unterschiedliche Füllstoffe, wie Kaolin, Kreide oder TiO₂ enthalten können, zu einer ausgezeichneten Leimungswirkung. Ein besonders hervorstechendes Merkmal dieser neuartigen Emulsionspolymerisate ist, daß sie ohne die sonst bei Leimungsmitteln oft beobachtete starke Schaumbildung in der Leimungsflotte eingesetzt werden können.

Die Oberflächenleimungsmittel sind nach allen bei der Papierherstellung für die Oberflächenleimung gebräuchlichen Verarbeitungsmethoden, wie Einsatz in der Leimpresse oder Aufbringen durch Sprühverfahren, einsetzbar. Sie können sowohl alleine als auch in Kombination mit wäßrigen Lösungen von Polymeren zur Anwendung kommen. Schaumfördernde Einflüsse, wie z.B. ungünstige apparative Voraussetzungen an der Papiermaschine oder der Leimpresse, schaumbildende Zusatzstoffe in der Leimungsmittelflotte und hohe Härtegrade des bei der Papierherstellung verwendeten Wassers zeigen bei den erfindungsgemäßen Produkten keine Wirkung. Somit stellt neben ihrer guten Leimungswirkung ihre fehlende Neigung zur Schaumbildung einen weiteren Vorteil dar, da sie völlig ohne Zusatz von Entschäumungsmitteln eingesetzt werden können.

Die Leimungsmittel eignen sich entweder alleine oder in Kombination mit Leimungsmitteln, die zur Masse gegeben werden, für die Oberflächenleimung nahezu aller in der Praxis hergestellter Papierqualitäten, z.B. von alaunhaltigen, alaunfreien, mit Kaolin gefüllten, mit Kreide gefüllten, mit TiO₂ gefüllten, im neutralen und sauren pH-Bereich gefahrenen, ungeleimten, vorgeleimten, holzhaltigen und Altpapier enthaltenden Papieren.

Die neuen Leimungsmittel zeichnen sich besonders dadurch aus, daß sie im Vergleich zu Leimungsmitteln mit hoher Anionizität ein wesentlich breiteres Anwendungsspektrum besitzen. Während letztere nur auf alaunhaltigen, vorgeleimten und holzhaltigen Papieren eine gute Leimungswirkung aufweisen, zeigen die erfindungsgemäßen Produkte zusätzlich zu den genannten Papieren auch auf alaunfreien und kreidehaltigen Papieren ausgezeichnete Leimungseigenschaften. Zur Erzielung einer guten Leimung auf den beiden zuletztgenannten Papieren war bisher immer der Einsatz von Oberflächenleimungsmitteln mit kationischer Ladung notwending.

### Beispiele

### Herstellung der polymeren Emulgatoren

### Beispiel 1 (Emulgator A)

130,5 Teile (0,75 Mol) einer Mischung aus 2,4-Toluylendiisocyanat und 2,6-Toluylendiisocyanat im Verhältnis 65:35 werden bei Raumtemperatur mit 0,4 Teilen eines Gemisches aus 1-Methyl-1-phospha-2-cyclopenten-1-oxid und 1-Methyl-1-phospha-3-cyclopenten-1-oxid versetzt und auf 60°C erhitzt. Der Carbodiimidisierungsgrad kann an der CO₂-Entwicklung und am Abfall des NCO-Wertes verfolgt werden. Bei einem NCO-Gehalt von 20,0 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 19,4 %
NCN-Einheiten pro Molekül (Durchschnittswert): 1,98
Das Reaktionsprodukt wird in 75 Teilen Aceton gelöst und bei 80°C mit 54 Teilen (0,1255 Mol) eines propoxylierten Adduktes aus 2-Butendiol-1,4 und NaHSO₃ (MG: 430) über einen Zeitraum von 90 Minuten zur Reaktion gebracht.

Anschließend wird das Reaktionsprodukt auf 60°C abgekühlt und mit 95 Teilen (0,333 Mol) Stearinsäure versetzt, bei 60°C 30 Minuten verrührt und danach mit 300 Teilen Aceton verdünnt. Es wird wieder auf 60°C erwärmt und 26,4 Teile (0,251 Mol) Diethanolamin werden zugegeben und 30 Minuten verrührt. Anschließend werden 25,1 Teile (0,251 Mol) Bernsteinsäureanhydrid zugegeben und zur Reaktion gebracht. Nach 60 Minuten wird mit 25,4 Teilen Triethylamin (0,251 Mol) versalzt und nach weiteren 30 Minuten mit 780 Teilen Wasser dispergiert.

Es entsteht eine klare Lösung mit einem Feststoffgehalt von 30 Gew.-% und einem pH-Wert von 6. Der gelöste Feststoff weist einen Gehalt an Sulfonatgruppen von 37,5 Milliäquivalenten pro 100 g und einen Gehalt an Carboxylatgruppen von 75,2 Milliäquivalenten pro 100 g sowie einen Gehalt an acylierten Harnstoffgruppen 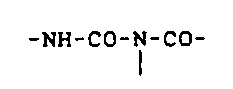
von 8,5 % auf.

### Beispiel 2 (Emulgator B)

130,5 Teile (0,75 Mol) einer Mischung aus 2,4-Toluylendiisocyanat und 2,6-Toluylendiisocyanat im Verhältnis 65:35 werden bei Raumtemperatur mit 0,04 Teilen eines Gemisches aus 1-Methyl-1-phospha-2-cyclopenten-1-oxid und 1-Methyl-1-phospha-3-cyclopenten-1-oxid versetzt und auf 60°C erhitzt. Der Carbodiimidisierungsgrad kann an dr CO₂-Entwickung und am Abfall des NCO-Wertes verfolgt werden. Bei einem NCO-Gehalt von 20,0 % wird auf 60°C abgekühlt und mit 0,2 Teilen Phosphortrichlorid abgestoppt. Nach weiteren 30 Minuten stellt sich ein konstanter NCO-Wert ein.

Analyse des Reaktionsproduktes:
NCO-Wert: 18,9 %
NCN-Einheiten pro Molekül (Durchschnittswert): 2,09
Das Reaktonsprodukt wird in 75 Teilen Aceton gelöst und bei 80°C mit 52 Teilen (0,1214 Mol) eines propoxylierten Addutes aus 2-Butendiol-1,4 und NaHSO₃ (MG: 430) über einen Zeitraum von 90 Minuten zur Reaktion gebracht.

Anschließend wird das Reaktionsprodukt auf 60°C abgekühlt und mit 96 Teilen (0,338 Mol) Stearinsäure versetzt, bei 60°C 30 Minuten verrührt und danach mit 300 Teilen Aceton verdünnt. Es wird wieder auf 60°C erwärmt und 26,4 Teile (0,251 Mol) Diethanolamin werden zugegeben. Anschließend werden 48,6 Teilen (0,486 Mol) Bernsteinsäureanhydrid zugegeben und zur Reaktion gebracht. Nach 60 Minuten wird mit 49,0 Teilen Triethylamin (0,486 Mol) versalzt und nach weiteren 30 Minuten mit 880 Teilen Wasser dispergiert.

Es entsteht eine klare Lösung mit einem Feststoffgehalt von 29 Gew.-% und einem pH-Wert von 6. Der gelöste Feststoff weist einen Gehalt an Sulfonatgruppen von 32 Milliäquivalenten pro 100 g und einen Gehalt an Carboxylatgruppen von 128 Milliäquivalenten pro 100 g sowie einen Gehalt an acylierten Harnstoffgruppen 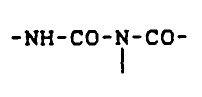
von 7,15 % auf.

### Herstellung der Leimungsmittelemulsionen:

### Leimungsmittel I:

In einem Rührgefäß, das mit Rührer, Rückflußkühler und zwei Tropftrichtern ausgerüstet ist, wird unter Überleiten eines Stickstoffstromes eine Lösung von 51,7 g des polymeren Emulgators A (Festgehalt: 29 %) in 545 g entionisiertem Wasser vorgelegt und auf eine Temperatur von 65°C erhitzt.

Danach gibt man von den Lösungen I und II (s.u.) jeweils 1/4 auf einmal in das Rührgefäß, rührt 1 Stunde bei 65°C und dosiert die restlichen Lösungen I und II innerhalb von 3 Stunden zu. Nach beendeter Zugabe wird noch 2 Stunden bei 70°C und 3 Stunden bei 80°C nachgerührt.

Nach Beendigung der Polymerisation ist eine feinteilige Leimungsmittelemulsion mit einem Festgehalt von 14 Gew.-% entstanden. Die durch Laserlichtstreuung ermittelte mittlere Teilchengröße beträgt 90 nm.

| | |
|---|---|
| Lösung I: | 800 mg Kaliumpersulfat |
| | 70 g entionisiertes Wasser |
| Lösung II: | 50 g n-Butylacrylat |
| | 50 g Acrylnitril |

### Leimungsmittelemulsion II:

Zu einer Lösung von 25,9 g des Emulgators B (Festgehalt 29 %) in 521 g entionisiertem Wasser gibt man unter einer Stickstoffatmosphäre eine Lösung von 200 mg Kaliumpersulfat in 17,5 g Wasser sowie 12,5 g n-Butylacrylat und 12,5 g Acrylnitril und erhitzt unter Rühren auf eine Temperatur von 65°C.

Nach einer Stunde bei dieser Temperatur werden die Lösungen I und II innerhalb von 3 Stunden zudosiert.

| | |
|---|---|
| Lösung I: | 600 mg Kaliumpersulfat |
| | 62,5 g entionisiertes Wasser |
| Lösung II: | 37,5 g n-Butylacrylat |
| | 37,5 g Acrylnitril |

Nach beendeter Zudosierung wird noch 25 Stunden bei 70°C und 3 Stunden bei 80°C nachgerührt.

Die entstandene feinteilige Emulsion besitzt einen Feststoffgehalt von 14,1 % und weist eine mittlere Teilchengröße von 105 nm auf.

### Leimungsmittelemulsion III:

In einem 1 l-Rührgefäß, das mit Rührer, Rückflußkühler, Stickstoffeinleitung und zwei Tropftrichtern ausgerüstet ist, werden 68,9 g einer 29 %igen Lösung des polymeren Emulgators A, 560 g entionisiertes Wasser und 270 mg Rongalit C unter Überleiten eines schwachen Stickstoffstromes vorgelegt. Nach Erwärmen der Lösung auf 50°C werden von den Lösungen I und II jeweils 1/4 auf einmal zugegeben. Nach 1-stündigem Rühren dosiert man diese restlichen Lösungen I und II getrennt innerhalb von 3 Stunden zu.

Nach beendeter Zugabe wird noch 6 Stunden bei 50°C nachgerührt. Die entstandene feinteilige Leimungsmittelemulsion hat einen Feststoffgehalt von 14,1 % und eine mittlere Teilchengröße von 59 nm.

| | |
|---|---|
| Lösung I: | 800 mg Ammoniumpersulfat |
| | 70 g entionisiertes Wasser |
| Lösung II: | 50 g n-Butylacrylat |
| | 50 g Acrylnitril |

Alle drei Leimungsmittelemulsionen I bis III können direkt als solche zur Oberflächenleimung von Papier eingesetzt werden.

### Anwendungsbeispiele:

Die Leimungswirkung der erfindungsgemäßen Leimungsmittel wurde auf alaunfreien und alaunhaltigen Papieren folgender Zusammensetzung geprüft:
a) Alaunfreies Papier:
   50 % Nadelholzzellstoff, 50 % Laubholzzellstoff, 9,5 % Clay-Achse, pH-Wert im Stoffauflauf: 7,2; Mahlgrad: 35°SR; Naßaufnahme in einer Laborleimpresse ca. 85 %; Flächengewicht: 80 g/m².
b) Alaunhaltiges Papier:
   50 % Nadelholzzellstoff, 50 % Laubholzzellstoff, 1 % Alaun, 11,2 % Clay-Asche, pH-Wert im Stoffauflauf: 5,0; Mahlgrad: 35°SR; Naßaufnahme: ca. 80 %; Flächengewicht: 80 g/m².

Die Leimung der Papiere erfolgte auf einer Laborleimpresse der Firma Mathis, Zürich, Schweiz,Typ HF. Als Leimungsflotte wurde eine Lösung aus 5 Gew.-Teilen handelsüblicher Stärke sowie 0,15, 0,20, 0,26, 0,32 und 0,40 Teilen des zu prüfenden Leimungsmittels verwendet, die mit Wasser bis auf 100 Teile ergänzt wurde. Die Trocknung der oberflächengeleimten Papiere erfolgte auf einem Trockenzylinder innerhalb einer Minute bei ca. 100°C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgeführt. Für die Tintenschwimmproben wurden die Papiere in Streifen von 3 cm Breite und 3 cm Länge geschnitten und bei 22°C auf blaue Prüftinte (DIN 53 126) gelegt. Nach für die einzelnen Papiersorten unterschiedlichen Prüfzeiten wurden die Probenpapiere von der Tinte genommen, rückseitig auf Löschpapier abgequetscht und nach 5 Minuten visuell beurteilt. Zur qualitativen Bestimmung der Tintendurchdringung durch das Papier und somit des Leimungsgrades wurde eine Bewertung mi den Zahlen 1 bis 5 durchgeführt, wobei die Zahlen im einzelnen bedeuten:
1 kein Tintendurchschalg
2 5 bis 10 % Tintendurchschlag
3 10 bis 20 % Tintendurchschlag
4 ca. 50 % Tintendurchschlag
4,5*) ca. 90 % Tintendurchschlag
5 100 % Tintendurchschlag

*⁾ Außerdem können noch weitere Zwischenwerte herangezogen werden.

Die folgenden Tabellen zeigen die Wirksamkeit der erfindungsgemäßen Papieroberflächenleimungsmittel I-III auf verschiedenen Papiersorten.

In den Anwendungsbeispielen 1 bis 3 wurden alaunfreies und alaunhaltiges Papier mit jeweils 0,2 % der Leimungsmittel I bis III in der Oberfläche geleimt. Die dabei gemessenen anwendungstechnischen Ergebnisse sind in den Tabellen 1 bis 3 zusammengestellt.

### Anwendungsbeispiel 1: Leimungsmittel I.

**Tabelle 1**

| Papiersorte | Cobb-Wert (60") [g/m²] | TSP | |
|---|---|---|---|
| | | Zeit (Min.) | Bewertung |
| Alaunfrei | 31,0 | 6 | 3 |
| Alaunhaltig | 26,6 | 10 | 2,5 |

### Anwendungsbeispiel 2: Leimungsmittel II

**Tabelle 2**

| Papiersorte | Cobb-Wert (60") [g/m²] | TSP | |
|---|---|---|---|
| | | Zeit (Min.) | Bewertung |
| Alaunfrei | 28,6 | 15 | 3,0 |
| Alaunhaltig | 27,8 | 15 | 3,0 |

### Anwendungsbeispiel 3: Leimungsmittel III

**Tabelle 3**

| Papiersorte | Cobb-Wert (60") [g/m²] | TSP | |
|---|---|---|---|
| | | Zeit (Min.) | Bewertung |
| Alaunfrei | 28,5 | 5 | 2,5 |
| Alaunhaltig | 23,2 | 7 | 3 |

### Anwendungsbeispiel 4:

Am Beispiel der Leimungsmittel I bis III wird das Schaumverhalten der erfindungsgemäßen Oberfächenleimungsmittel beschrieben.

0,4 Gew.-% Wirksubstanz werden in einer Leimungsflotte aus 5 Gew.-% handelsüblicher Stärke (Perfectamyl A 4652 ®) gelöst und auf 60°C erwärmt. 200 ml dieser Leimungsflotte werden aus einem Aluminiumgefäß, das an seiner Unterseite eine kreisförmige Öffnung von 4 mm Durchmesser (Ford-Becher) besitzt, aus einer Höhe von 60 cm in ein graduiertes Becherglas im freien Fall geleitet. Das Volumen in ml des sich über der Flüssigkeitsoberfäche bildenden Schaumes wird einmal sofort sowie nach 1-minütigem Stehen an der Luft bestimmt.

Der erste Wert gibt dabei Aufschluß über die Schaumbildungstendenz des Leimungsmittels und der zweite Wert über die Schnelligkeit des Schaumabbaus bzw. über dessen Stabilität. Die mit den Oberflächenleimungsmitteln erhaltenen Prüfergebnisse sind in Tabelle 4 zusammengestellt:

**Tabelle 4**

| Leimungsmittel | Schaumvolumen i. ml | |
|---|---|---|
| | sofort | nach 1 Min. |
| I | 50 | 0 |
| II | 10 | 0 |
| III | 80 | 20 |

Aus den gefundenen Ergebnissen geht deutlich hervor, daß die geprüften Produkte entweder eine sehr geringe (Leimungsmittel III) oder aber praktisch überhaupt keine (Leimungsmittel I und II) Tendenz zur Schaumbildung aufweisen.

## Patentansprüche

1. Emulsionspolymerisate, die dadurch erhältlich sind, daß man ein Gemisch aus
A) 5-95 Gew.-% mindestens eines Monomeren aus der Reihe Acrylnitril, Methacrylnitril, Carbonsäurevinylester und
B) 5-95 Gew.-% Acryl- und/oder Methacrylsäureester
wobei die Summe der Komponenten A) + B) 100 Gew.-% beträgt, in Gegenwart einer wäßrigen Lösung oder Dispersion eines anionisch modifizierten Polyurethans, mit
einem Gehalt an acylierten Harnstoffgruppen der Formel 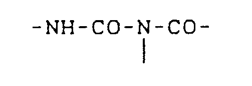 von 0,1 bis 20 Gew.-%, bezogen auf Feststoff,
emulgiert, und man die erhaltene Emulsion einer radikalisch initiierten Polymerisation unterwirft.

2. Emulsionspolymerisate gemäß Anspruch 1, dadurch erhältlich, daß man die als Emulgator verwendete wäßrige Lösung oder Dispersion des anionisch modifizierten Polyurethans durch Umsetzung von
a) organischen Polyisocyanaten, die zumindest anteilig Acylharnstoffgruppen der Formel 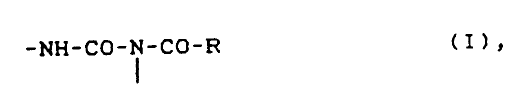
in der R einen organischen Rest, vorzugsweise einen gesättigten oder ungesättigten aliphatischen Kohlenwasserstoffrest mit 1 bis 35 C-Atomen, einen Arylrest mit 6 bis 10 C-Atomen oder einen araliphatischen Rest mit 7 bis 10 C-Atomen bedeutet, wobei bei Vorliegen von mehreren Resten R im gleichen Molekül nebeneinander unterschiedliche Reste R vorliegen können, aufweisen,
gegebenenfalls unter Mitverwendung organischer Monoisocyanate
mit
b) gegenüber Isocyanatgruppen reaktionsfähige Gruppen aufweisenden Verbindungen, und gegebenenfalls unter Mitverwendung von
c) Hilfs- und Zusatzstoffen
und Überführung des erhaltenen Polyisocyanatadditionsprodukts in eine wäßrige Lösung oder Dispersion während oder im Anschluß an die Polyadditionsreaktion herstellt, wobei anionische Gruppen, insbesondere Carboxylat- oder Sulfonatgruppen oder in derartige Gruppen überführbare Gruppen aufweisende Aufbaukomponenten (mit)verwendet werden, wobei die zumindest teilweise Überführung der in Salzgruppen der genannten Art überführbaren Gruppen während oder anschließend an die Polyaddition erfolgt, und gegebenenfalls unter Mitverwendung von Aufbaukomponenten a) und/oder b), welche innerhalb einer Polyetherkette vorliegende Ethylenoxyeinheiten aufweisen, wobei die Gesamtmenge derartiger hydrophiler Aufbaukomponenten so bemessen wird, daß in dem Polyisocyanat-Polyadditionsprodukt eine die Löslichkeit oder Dispergierbarkeit in Wasser gewährleistende Menge an anionischen Gruppen, vorzugsweise von 2 bis 300 Milliäquivalenten pro 100 g Feststoff und gegebenenfalls an Ethylenoxidgruppen der genannten Art, vorzugsweise von 0 bis 25 Gew.-%, vorliegen.

3. Emulsionspolymerisate gemäß den Ansprüchen 1 und 2, dadurch gekennzeichnet, daß man als Aufbaukomponenten b)
Sulfonatdiole der allgemeinen Formel 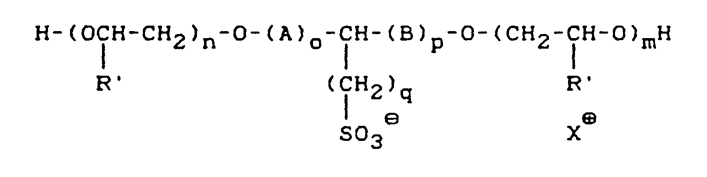 wobei
A und B für gleiche oder verschiedene zweiwertige aliphatische Kohlenwasserstoffreste mit 1 bis 6 Kohlenstoffatomen stehen,
R' für Wasserstoff, einen aliphatischen Kohlenwasserstoffrest mit 1 bis 4 Kohlenstoffatomen oder einen Phenylrest steht,
X^{⊕} für ein Alkalimetallkation oder eine gegebenenfalls substituierte Ammoniumgruppe steht,
n und m für gleiche oder verschiedene Zahlen von 0 bis 30 stehen,
o und p für jeweils 0 oder 1 stehen und
q für eine ganze Zahl von 0 bis 2 steht,
verwendet.

4. Emulsionspolymerisate gemäß einem oder mehreren der Ansprüche 1-3, dadurch erhältlich, daß man die Polymerisation des Monomerengemisches aus A) und B) in Gegenwart von 5 bis 50 Gew.-%, bevorzugt 7,5 bis 30 Gew.-%, bezogen auf das Monomerengemisch, des anionisch modifizierten Polyurethans durchführt.

5. Emulsionspolymerisate gemäß einem oder mehreren der Ansprüche 1-4, dadurch gekennzeichnet, daß man die Emulsionspolymerisation in Gegenwart eines oligomeren nicht-ionogenen und/oder niedermolekularen anionischen Hilfsemulgators, vorzugsweise in Mengen von 1-40 Gew.-% Hilfsemulgator, bezogen auf das anionisch modifizierte Polyurethan, durchführt.

6. Polymerisate gemäß einem oder mehreren der Ansprüche 1 bis 5, die dadurch erhältlich sind, daß man A) mindestens ein Monomer aus der Reihe Acrylnitril, Vinylacetat, Methacrylnitril und B) mindestens einen (Meth)Acrylsäureester mit 1-12 C-Atomen im Alkoholrest wie Ethylacrylat, Methylmethacrylat, n-Butylacrylat, i-Butylacrylat, 2-Ethylhexylacrylat, 3-Hydroxypropylmethacrylat einsetzt.

7. Polymerisate gemäß einem oder mehreren der Ansprüche 1 bis 6, dadurch erhältlich, daß man ein Monomerengemisch aus 20 bis 80 Gew.-%, insbesondere 30 bis 70 Gew.-% A) und 80 bis 20 Gew.-%, insbesondere 70 bis 30 Gew.-% B) einsetzt.

8. Emulsionspolymerisate gemäß einem oder mehreren der Ansprüche 1 bis 7, dadurch erhältlich, daß die Polymerisation der Monomeren durch Radikalstarter bei Temperaturen von 20 bis 100°C initiiert wird.

9. Emulsionspolymerisate gemäß einem oder mehreren der Ansprüche 1-8, dadurch gekennzeichnet, daß sie in Form kolloiddisperser Lösungen mit mittleren Teilchendurchmessern von 15 bis 200 nm vorliegen.

10. Verwendung der Polymerisate gemäß einem oder mehreren der Ansprüche 1 bis 9 zur Oberflächenleimung von Papier oder papierähnlichen Materialien.

## Claims

1. Emulsion polymers obtainable by emulsifying a mixture consisting of
A) 5-95 % by weight of at least one monomer from acrylonitrile, methacrylonitrile and vinyl carboxylates and
B) 5-95 % by weight of acrylic and/or methacrylic esters,
the sum of components A) + B) being 100 % by weight, in the presence of an aqueous solution or dispersion of an anionically modified polyurethane, containing
acylated urea groups of the formula 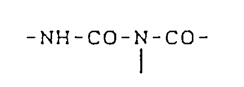 in an amount of 0.1 to 20 % by weight, relative to solid,
and subjecting the resulting emulsion to a free-radically initiated polymerization.

2. Emulsion polymers according to Claim 1, obtainable by preparing the aqueous solution or dispersion of the anionically modified polyurethane which is used as the emulsifier by reaction of
a) organic polyisocyanates at least partly containing acylurea groups of the formula 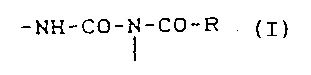
in which R denotes an organic radical, preferably a saturated or unsaturated aliphatic hydrocarbon radical having 1 to 35 C atoms, an aryl radical having 6 to 10 C atoms or an araliphatic radical having 7 to 10 C atoms and if two or more radicals R are present side by side in the same molecule they can have different meanings,
if appropriate in the presence of organic monoisocyanates, with
b) compounds containing groups which are reactive towards isocyanate groups, if appropriate in the presence of
c) auxiliaries and additives,
and conversion of the resulting polyisocyanate addition product into an aqueous solution or dispersion during or following the polyaddition reaction, wherein the formative components used contain anionic groups, in particular carboxylate or sulphonate groups or groups which can be converted into these groups, and wherein the at least partial conversion of the groups which can be converted into salt groups of the type mentioned is carried out during or following the polyaddition and, if appropriate, in the presence of formative components a) and/or b) which have ethyleneoxy units within a polyether chain, the total amount of these hydrophilic structural components being such that there are present in the polyisocyanate polyaddition product, in an amount of anionic that guarantees solubility or dispersility in water, anionic groups, preferably 2 to 300 milliequivalents per 100g of solid, and, if appropriate, ethylene oxide groups of the type mentioned, preferably 0 to 25 % by weight.

3. Emulsion polymers according to Claims 1 and 2, characterized in that the formative components b) used are sulphonatediols of the general formula 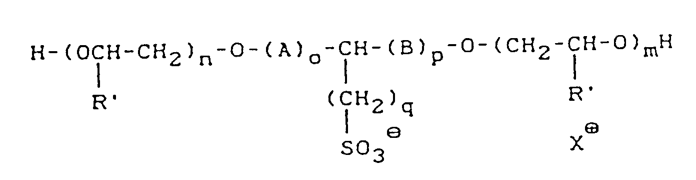 in which
A and B represent identical or different divalent aliphatic hydrocarbon radicals having 1 to 6 carbon atoms,
R' represents hydrogen, an aliphatic hydrocarbon radical having 1 to 4 carbon atoms or a phenyl radical,
X^{⊕} represents an alkali metal cation or a substituted or unsubstituted ammonium group,
n and m represent identical or different numbers from 0 to 30,
o and p each represent 0 or 1 and
q represents an integer from 0 to 2.

4. Emulsion polymers according to one or more of Claims 1-3, obtainable by carrying out the polymerization of the monomer mixture of A) and B) in the presence of 5 to 50 % by weight, preferably 7.5 to 30 % by weight, relative to the monomer mixture, of the anionically modified polyurethane.

5. Emulsion polymers according to one or more of Claims 1-4, characterized in that the emulsion polymerization is carried out in the presence of an oligomeric nonionic and/or low-molecular-weight anionic auxiliary emulsifier, preferably in amounts of 1-40 % by weight of auxiliary emulsifier, relative to the anionically modified polyurethane.

6. Polymers according to one or more of Claims 1 to 5, obtainable by using A) at least one monomer from acrylonitrile, vinyl acetate and methacrylonitrile and B) at least one (meth)acrylic ester having 1-12 C atoms in the alcohol radical, such as ethyl acrylate, methyl methacrylate, n-butyl acrylate, i-butyl acrylate, 2-ethylhexyl acrylate, 3-hydroxypropyl methacrylate.

7. Polymers according to one or more of Claims 1 to 6, obtainable by using a monomer mixture of 20 to 80 % by weight, in particular 30 to 70 % by weight, of A) and 80 to 20 % by weight, in particular 70 to 30 % by weight, of B).

8. Emulsion polymers according to one or more of Claims 1 to 7, obtainable by initiating the polymerization of the monomers with free radical initiators at temperatures from 20 to 100°C.

9. Emulsion polymers according to one or more of Claims 1-8, characterized in that they are present in the form of colloid disperse solutions having average particle diameters of 15 to 200 nm.

10. Use of the polymers according to one or more of Claims 1 to 9 for surface-sizing of paper or paper-like materials.

## Revendications

1. Polymères en émulsion, obtenus en mettant en émulsion un mélange de
A) 5 à 95 % en poids d'au moins un monomère de la classe de l'acrylonitrile, du méthacrylonitrile, des carboxylates de vinyle et
B) 5 à 95 % en poids d'esters acryliques et/ou méthacryliques,
la somme des composants A) + B) représentant 100 % en poids, en présence d'une solution ou dispersion aqueuse, d'un polyuréthanne à modification anionique, à une teneur en groupes urée acylés de formule 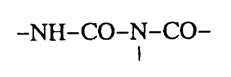 de 0,1 à 20 % en poids sur les matières solides,
et en soumettant l'émulsion obtenue à polymérisation radicalaire.

2. Polymères en émulsion selon la revendication 1, obtenus en préparant la solution ou dispersion aqueuse de polyuréthanne à modification anionique utilisée en tant qu'agent émulsionnant en faisant réagir
a) des polyisocyanates organiques contenant, en partie au moins, des groupes urée acylés, de formule 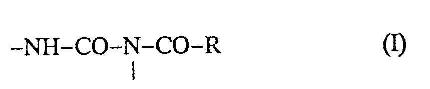 dans laquelle R représente un radical organique, de préférence un radical hydrocarboné alipatique saturé ou insaturé en C₁-C₃₅, un radical aryle en C₆-C₁₀ ou un radical araliphatique en C₇-C₁₀, étant précisé, que dans le cas où il y a plusieurs radicaux R dans la même molécule, ces radicaux peuvent être différents,
éventuellement avec utilisation conjointe de monoisocyanates organiques, avec
b) des composés contenant des groupes réactifs avec les groupes isocyanate, et le cas échéant avec utilisation conjointe de
c) des produits auxiliaires et additifs,
et en mettant le produit d'addition de polyisocyanate ainsi obtenu à l'état de solution ou dispersion aqueuse durant ou après la réaction de polyaddition, avec utilisation (conjointe) de composants de synthèse contenant des groupes anioniques en particulier des groupes carboxylate ou sulfonate, ou des groupes convertibles en de tels groupes, la conversion au moins partielle des groupes de ce type, convertibles en groupes salins, étant réalisée durant ou après la polyaddition, et le cas échéant avec utilisation conjointe de composants de synthèse a) et/ou b) contenant, à l'intérieur d'une chaîne de polyéther, des motifs éthylène-oxy, la quantité totale de ces composants de synthèse hydrophiles étant réglée en sorte que, dans le produit de polyaddition de polyisocyanate, il y ait une quantité de groupes anioniques assurant la solubilité ou dispersabilité dans l'eau, de préférence une quantité de 2 à 300 milliéquivalents pour 100 g de matières solides et le cas échéant des groupes oxyde d'éthylène du type en question, de préférence en quantité de 0 à 25 % en poids.

3. Polymères en émulsion selon les revendications 1 et 2, caractérisés en ce que l'on utilise en tant que composants de synthèse b) des sulfonate-diols de formule générale 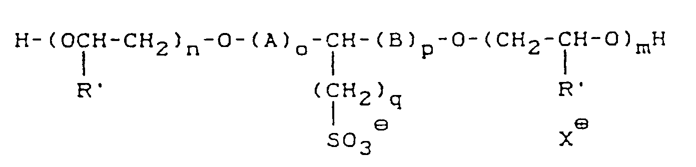 dans laquelle
A et B représentent des radicaux hydrocarbonés aliphatiques divalents identiques ou différents en C₁-C₆,
R' représente l'hydrogène, un radical hydrocarboné aliphatique en C₁-C₄ ou un radical phényle,
X^{⊕} représente un cation de métal alcalin ou un groupe ammonium éventuellement substitué,
n et m sont des nombres identiques ou différents allant de 0 à 30,
o et p sont égaux chacun à 0 ou 1 et
q est un nombre entier allant de 0 à 2.

4. Polymères en émulsion selon une ou plusieurs des revendications 1 à 3, obtenus en polymérisant le mélange des monomères A et B en présence de 5 à 50 % en poids, de préférence de 7,5 à 30 % en poids, par rapport au mélange des monomères, du polyuréthanne à modification anionique.

5. Polymères en émulsion selon une ou plusieurs des revendications 1 à 4, caractérisés en ce que la polymérisation en émulsion est effectuée en présence d'un agent émulsionnant auxiliaire non ionique oligomère et/ou anionique à bas poids moléculaire, de préférence en quantité de 1 à 40 % du poids du polyuréthanne à modification anionique.

6. Polymères selon une ou plusieurs des revendications 1 à 5, obtenus en utilisant A) au moins un monomère de la classe de l'acrylonitrile, de l'acétate de vinyle, du méthacrylonitrile, et B) au moins un ester (méth)acrylique contenant 1 à 12 atomes de carbone dans le radical alcoolique, comme l'acrylate d'éthyle, le méthacrylate de méthyle, l'acrylate de n-butyle, l'acrylate d'isobutyle, l'acrylate de 2-éthylhexyle, le méthacrylate de 3-hydroxypropyle.

7. Polymères selon une ou plusieurs des revendications 1 à 6, obtenus à partir d'un mélange de monomères consistant en 20 à 80 % en poids, plus spécialement 30 à 70 % en poids de A) et 80 à 20 % en poids, plus spécialement 70 à 30 % en poids de B).

8. Polymères en émulsion selon une ou plusieurs des revendications 1 à 7, obtenus en déclenchant la polymérisation des monomères au moyen d'inducteurs radicalaires à des températures de 20 à 100°C.

9. Polymères en émulsion selon une ou plusieurs des revendications 1 à 8, caractérisés en ce qu'ils sont à l'état de solutions en dispersion colloïdales à des diamètres de particule moyens de 15 à 200 nm.

10. Utilisation des polymères selon une ou plusieurs des revendications 1 à 9 pour le collage en surface du papier ou de matières analogues au papier.
